# FASCICULE DE BREVET EUROPEEN

(11) **EP 3 024 639 B1**
(45) Date de publication et mention de la délivrance du brevet: **23.05.2018**
(21) Numéro de dépôt: 14755864.7
(22) Date de dépôt: 21.07.2014
(51) Int. Cl.: B29B 11/14, B29B 11/16, B29C 70/48, B29C 70/22, B29C 70/54, B29C 45/14, B29K 101/12, B29K 105/20

(54) **PROCÉDÉ DE MOULAGE PAR INJECTION D'UNE PIÈCE EN MATÉRIAU COMPOSITE AVEC PRÉ-CONSOLIDATION PRÉALABLE DE LA PRÉFORME FIBREUSE**
VERFAHREN ZUM SPRITZGIESSEN EINES TEILS AUS EINEM VERBUNDSTOFF MIT VORKONSOLIDIERUNG DER FASERVORFORM
METHOD FOR INJECTION MOLDING A PART MADE OF A COMPOSITE MATERIAL HAVING ADVANCE PRE-CONSOLIDATION OF THE FIBROUS PREFORM

(30) Priorité: 22.07.2013 FR 1357193
(43) Date de publication de la demande: 01.06.2016
(73) Titulaire: SAFRAN, 75015 Paris (FR)
(72) Inventeur: TRANQUART, Bastien, 92160 Antony (FR); PAUTARD, Sébastien, F-91120 Palaiseau (FR)
(74) Mandataire: Desormiere, Pierre-Louis
(86) Numéro de dépôt international: PCT/FR2014/051876
(87) Numéro de publication internationale: WO 2015/011389

(56) Documents cités:
- EP-A1- 1 749 631
- WO-A1-98/50211
- WO-A1-2011/003786
- US-A- 5 766 534

## Description

### Arrière-plan de l'invention

La présente invention se rapporte au domaine général de la fabrication de pièces en matériau composite comprenant un renfort fibreux densifié par une matrice.

Elle concerne plus précisément un procédé de moulage par injection d'une pièce en matériau composite, par exemple dans le domaine aéronautique.

De façon connue, un procédé de moulage par injection consiste à placer une préforme fibreuse dans un moule d'injection, à injecter une résine liquide sous pression dans le moule d'injection de manière à imprégner la préforme, à polymériser la résine, puis à démouler la pièce. Dans le cas d'un matériau composite à matrice organique, les résines utilisées sont généralement des résines thermodurcissables ou thermoplastiques.

Le document WO 98 50 211 A1 divulgue à cet égard un procédé de moulage par injection selon le préambule de la revendication 1. Avec ce type de procédé, il est fréquent que l'injection de résine sous pression dans le moule d'injection crée des défauts sur la préforme, notamment des problèmes de positionnement des fils de la préforme (certains fils de la préforme ont tendance à bouger) et des problèmes de décadrage inter laminaire (c'est-à-dire de déformation entre deux plies différentes).

Or, l'apparition de défauts sur la préforme fibreuse lors de la phase d'injection de résine génère des modifications des propriétés mécaniques locales dans la pièce finale, en particulier des abattements des modules et des modifications des axes des fils de chaîne et de trame, ainsi que des déformées post-injection.

De plus, en cas d'utilisation de résines thermoplastiques, ces défauts sont amplifiés par les fortes pressions d'injection qui sont nécessaires pour tenir compte de la viscosité élevée de ces résines. L'ajout d'additifs permettant de limiter la viscosité de ces résines n'est par ailleurs pas suffisant pour pallier de tels inconvénients.

### Objet et résumé de l'invention

La présente invention a donc pour but principal de proposer un procédé de moulage par injection qui ne présente pas les inconvénients précités.

Ce but est atteint grâce à un procédé de moulage par injection d'une pièce en matériau composite comprenant un renfort fibreux densifié par une matrice, le procédé comprenant successivement le placement d'une préforme fibreuse dans un moule d'injection, l'injection sous pression dans le moule d'une résine thermoplastique de manière à imprégner la préforme et la polymérisation de la résine, et dans lequel, conformément à l'invention, la préforme fibreuse est consolidée dans le moule d'injection préalablement à l'injection de la résine.

Par rapport aux procédés de moulage par injection connus, l'invention prévoit une étape consistant à consolider la préforme fibreuse préalablement à l'injection de la résine. Cette pré-consolidation de la préforme fibreuse permet ainsi de limiter les effets de décadrage sur la préforme lors de l'injection de la résine de polymérisation. L'homogénéité des propriétés mécaniques de la pièce obtenue s'en trouve ainsi grandement améliorée.

De préférence, le procédé comprend une étape de consolidation de la préforme fibreuse préalablement à l'injection de la résine dans le moule d'injection comprenant la réalisation d'une préforme fibreuse à l'intérieur de laquelle une résine de consolidation est présente, la mise en place de la préforme fibreuse dans un outillage de consolidation, le chauffage de l'outillage de consolidation à la température de fusion de la résine de consolidation présente à l'intérieur de la préforme fibreuse, et la solidification de la résine de consolidation.

La réalisation d'une préforme fibreuse à l'intérieur de laquelle une résine de consolidation est présente peut comprendre l'insertion de fils de résine de consolidation au cours du tissage de la préforme fibreuse.

Alternativement, la réalisation d'une préforme fibreuse à l'intérieur de laquelle une résine de consolidation est présente peut comprendre le poudrage de la préforme fibreuse par une résine de consolidation sous forme de poudre.

Encore alternativement, la réalisation d'une préforme fibreuse à l'intérieur de laquelle une résine de consolidation est présente peut comprendre la réalisation d'une préforme fibreuse à l'aide de fils enduits de résine de consolidation.

Par ailleurs, l'étape de consolidation de la préforme fibreuse peut comprendre en outre l'application d'une pression de compactage de la préforme fibreuse dans l'outillage de consolidation. L'application d'une telle pression de compactage permet de limiter la porosité dans la préforme et d'optimiser son positionnement dans l'outillage de consolidation et sa mise en forme finale pour l'obtention de formes gauches.

De préférence également, la résine de consolidation est identique à celle injectée dans le moule d'injection de façon à optimiser les aspects cohésifs et adhésifs.

L'étape de consolidation de la préforme fibreuse est réalisée à l'aide d'un outillage de consolidation qui correspond au moule d'injection. Dans ce cas, le temps de fabrication de la pièce en matériau composite est raccourci car il n'y a pas de transfert de la préforme consolidée à effectuer.

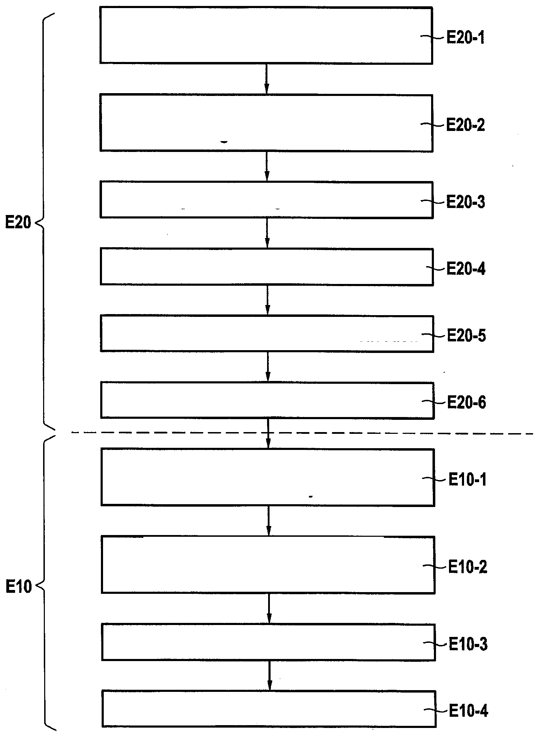

### Brève description du dessin

D'autres caractéristiques et avantages de la présente invention ressortiront de la description faite ci-dessous, en référence à la figure unique annexée qui en illustre un exemple de réalisation dépourvu de tout caractère limitatif.

### Description détaillée de l'invention

L'invention s'applique à la réalisation de pièces en matériau composite comprenant un renfort fibreux densifié par une matrice. Elle s'applique plus particulièrement à la réalisation de pièces utilisées dans le domaine aéronautique (par exemple des aubes de soufflante ou des aubes de redresseur) par un procédé de moulage par injection de résine liquide dans lequel la résine est une résine thermoplastique.

De façon bien connue en soi, le procédé de moulage par injection de résine liquide consiste à injecter sous pression une résine liquide dans un moule d'injection dans lequel une préforme fibreuse de la pièce à fabriquer a été préalablement placée. La polymérisation de la résine thermoplastique s'effectue pendant un cycle de refroidissement de la préforme avec une régulation de la température de l'outillage. Une fois la résine polymérisée, la pièce est démoulée.

La pression d'injection de la résine liquide dans le moule d'injection varie notamment en fonction de la nature de la résine. Typiquement, pour une pièce aéronautique, la pression est comprise entre 500 et 2400 bars pour une résine thermoplastique (à titre indicatif, elle est généralement comprise entre 10 et 30 bars pour une résine thermodurcissable).

La préforme fibreuse peut être obtenue de différentes façons connues de l'homme du métier. Il peut notamment s'agir d'une préforme obtenue directement par tissage tridimensionnel (3D), bidimensionnel (2D) ou 2,5D de fils (formés par exemple de fibres de carbone) ou par drapage ou empilement de séquences de tissus fibreux bidimensionnels.

La nature de la résine dépend notamment de la nature des fils utilisés pour former la préforme fibreuse. Pour une préforme réalisée à partir de fils de carbone ou de verre, on pourra utiliser une résine thermoplastique, par exemple une résine réalisée à partir de polysulfure de phénylène et/ou de polyétherimide et/ou de polyéthercétone ou un mélange de ces composants. De plus, cette résine peut éventuellement être chargée, par exemple par des fibres courtes ou longues, des écailles (« flakes » en anglais), billes, charges minérales, des nano-charges, etc.

Conformément à l'invention, le procédé de moulage par injection selon l'invention comprend, préalablement au processus de moulage proprement dit (E10), une consolidation de la préforme fibreuse (E20).

Plus précisément, comme représenté sur la figure, la consolidation de la préforme fibreuse préalablement à son placement dans le moule d'injection, consiste en premier lieu à réaliser une préforme fibreuse à l'intérieur de laquelle une résine de consolidation est présente (étape E20-1).

La résine de consolidation est une résine thermoplastique qui est de préférence identique à la résine injectée dans le moule d'injection lors du processus de moulage proprement dit. Cette résine de consolidation est utilisée directement pour la réalisation de la préforme fibreuse selon différentes techniques.

Lorsqu'elle est de nature thermoplastique, la résine de consolidation peut être différente de celle qui est injectée dans le moule d'injection. En effet, certains polymères ont une compatibilité chimique suffisante pour l'aspect cohésif/adhésif.

Selon l'une de ces techniques, des fils de résine de consolidation sont insérés directement dans la préforme fibreuse au cours du tissage de celle-ci. A cet effet, des fils de résine de consolidation sont utilisés au cours du tissage en remplacement de certains des fils de la préforme fibreuse. De préférence, on utilisera des fils de même nature que ceux de la résine injectée.

Selon une autre technique, de la résine de consolidation conditionnée sous forme de poudre est saupoudrée directement sur la préforme fibreuse une fois celle-ci réalisée.

Selon encore une autre technique, la préforme fibreuse est réalisée à l'aide de fils enduits de résine de consolidation (c'est-à-dire des fils traités par ensimage).

Une fois obtenue la préforme fibreuse à l'intérieur de laquelle une résine de consolidation est présente, celle-ci est placée dans un outillage de consolidation (étape E20-2).

Cet outillage de consolidation peut être un outillage de compression, d'estampage, un moule d'injection-compression, selon des modes de réalisation qui ne font pas partie de la présente invention, ou bien encore, conformément à la présente invention, le même moule d'injection que celui utilisé lors du processus de moulage proprement dit. Selon l'invention, l'outillage de consolidation est réalisé dans le même moule d'injection que celui utilisé lors du processus de moulage avec un noyau mobile (chauffé) ou dans un moule rotatif avec plusieurs phases (1^{ère} phase de consolidation avec noyau/empreinte dédié, 2^{ème} phase d'ouverture et de rotation/translation du moule, et 3^{ème} phase de fermeture du moule avec une nouvelle cavité qui permettra l'injection de la résine sur la préforme ainsi pré-consolidée).

L'outillage de consolidation est alors chauffé (étape E20-3) jusqu'à atteindre une température supérieure à la température de transition vitreuse de la résine de consolidation.

Si nécessaire, une pression de compactage peut être ajoutée lors du chauffage de l'outillage de consolidation (étape E20-4), notamment pour limiter la porosité dans la préforme fibreuse consolidée et optimiser le positionnement et le formage de celle-ci dans l'outillage de consolidation.

La solidification de la résine de consolidation peut alors être déclenchée (étape E20-5). Cette solidification est obtenue pendant le cycle de refroidissement à une température donnée et optimale de l'outillage de consolidation.

Après cette étape de solidification de la résine de consolidation, la préforme fibreuse est éjectée de l'outillage de consolidation (étape E20-6). La préforme obtenue est consolidée grâce à la résine de consolidation qui était présente à l'intérieur de la préforme et qui s'est polymérisée au sein de celle-ci.

A ce stade, la préforme fibreuse consolidée est rigide et peut être aisément manipulée. En particulier, la préforme fibreuse est suffisamment rigide pour que l'injection de résine sous pression au cours du moulage proprement dit ne génère pas de déformation de la préforme.

Le processus de moulage proprement dit peut alors démarrer (étape E10). A cet effet, comme indiqué précédemment, la préforme fibreuse consolidée est placée dans le moule d'injection (étape E10-1), selon un mode de réalisation qui ne fait pas partie de la présente invention. Bien entendu, cette étape, ainsi que l'étape E20-6 d'éjection de la préforme de l'outillage de consolidation, ne sont pas nécessaires si l'outillage de consolidation utilisé est le moule d'injection, comme c'est le cas dans la présente invention. Une fois le moule d'injection fermé, la résine liquide est injectée sous pression à l'intérieur de celui-ci (étape E10-2) afin d'y être polymérisée (par refroidissement - étape E10-3). La pièce obtenue est alors démoulée (étape E10-4) et éventuellement usinée aux formes finales voulues.

On notera que la pré-consolidation de la préforme fibreuse peut être en soi une pièce finie et le processus d'injection proprement dit permettra d'ajouter des fonctionnalités spécifiques à celles-ci (par injection et surmoulage d'éléments dans la pièce tels que des clips de fixation, des fûts pour le vissage, des talons métalliques, des nervures de positionnement, etc.).

## Revendications

1. Procédé de moulage par injection d'une pièce en matériau composite comprenant un renfort fibreux densifié par une matrice, le procédé comprenant successivement le placement d'une préforme fibreuse dans un moule d'injection (E10-1), l'injection sous pression dans le moule d'une résine thermoplastique de manière à imprégner la préforme (E10-2) et la polymérisation de la résine (E10-3), **caractérisé en ce que** la préforme fibreuse est consolidée dans le moule d'injection préalablement à l'injection de la résine.

2. Procédé selon la revendication 1, comprenant une étape (E20) de consolidation de la préforme fibreuse préalablement à l'injection de la résine dans le moule d'injection comprenant :
la réalisation d'une préforme fibreuse à l'intérieur de laquelle une résine de consolidation est présente (E20-1) ;
la mise en place de la préforme fibreuse dans le moule d'injection (E20-2) ;
le chauffage du moule d'injection à la température de fusion de la résine de consolidation présente à l'intérieur de la préforme fibreuse (E20-3) ; et
la solidification de la résine de consolidation (E20-5).

3. Procédé selon la revendication 2, dans lequel la réalisation d'une préforme fibreuse à l'intérieur de laquelle une résine de consolidation est présente comprend l'insertion de fils de résine de consolidation au cours du tissage de la préforme fibreuse.

4. Procédé selon la revendication 2, dans lequel la réalisation d'une préforme fibreuse à l'intérieur de laquelle une résine de consolidation est présente comprend le poudrage de la préforme fibreuse par une résine de consolidation sous forme de poudre.

5. Procédé selon la revendication 2, dans lequel la réalisation d'une préforme fibreuse à l'intérieur de laquelle une résine de consolidation est présente comprend la réalisation d'une préforme fibreuse à l'aide de fils enduits de résine de consolidation.

6. Procédé selon l'une quelconque des revendications 2 à 5, dans lequel l'étape de consolidation de la préforme fibreuse comprend en outre l'application d'une pression de compactage de la préforme fibreuse dans le moule d'injection (E20-4).

7. Procédé selon l'une quelconque des revendications 2 à 6, dans lequel la résine de consolidation est identique à celle injectée dans le moule d'injection.

## Patentansprüche

1. Verfahren zum Spritzgießen eines Teils aus Verbundwerkstoff, das eine durch eine Matrix verdichtete Faserverstärkung umfasst, wobei das Verfahren nacheinander das Anbringen eines Faservorformlings in der Spritzgussform (E10-1), das Einspritzen eines thermoplastischen Harzes unter Druck in die Form, um den Vorformling zu imprägnieren (E10-2), und die Polymerisation des Harzes (E10-3) umfasst, **dadurch gekennzeichnet, dass** der Faservorformling vor dem Einspritzen des Harzes in der Spritzgussform verfestigt wird.

2. Verfahren nach Anspruch 1, umfassend einen Schritt (E20) zur Festigung des Faservorformlings vor dem Einspritzen des Harzes in die Spritzgussform, der umfasst:
das Herstellen eines Faservorformlings, in dem ein Festigungsharz vorhanden ist (E20-1),
das Anbringen des Faservorformlings in der Spritzgussform (E20-2),
das Erhitzen der Spritzgussform auf die Schmelztemperatur des innerhalb des Faservorformlings vorhandenen Festigungsharzes (E20-3), und
das Festwerden des Festigungsharzes (E20-5).

3. Verfahren nach Anspruch 2, bei dem das Herstellen eines Faservorformlings, in dem ein Festigungsharz vorhanden ist, das Einfügen von Fäden aus Festigungsharz im Laufe des Webens des Faservorformlings umfasst.

4. Verfahren nach Anspruch 2, bei dem das Herstellen eines Faservorformlings, in dem ein Festigungsharz vorhanden ist, das Pulvern des Faservorformlings mit einem pulverförmigen Festigungsharz umfasst.

5. Verfahren nach Anspruch 2, bei dem das Herstellen eines Faservorformlings, in dem ein Festigungsharz vorhanden ist, das Herstellen eines Faservorformlings mit Hilfe von mit Festigungsharz überzogenen Fäden umfasst.

6. Verfahren nach einem der Ansprüche 2 bis 5, bei dem der Schritt des Verfestigens des Faservorformlings ferner das Anlegen eines Drucks zum Verdichten des Faservorformlings in der Spritzgussform (E20-4) umfasst.

7. Verfahren nach einem der Ansprüche 2 bis 6, bei dem das Festigungsharz mit dem in die Spritzgussform eingespritzten identisch ist.

## Claims

1. A method of injection molding a part made of composite material comprising fiber reinforcement densified by a matrix, the method comprising, in succession, placing (E10-1) a fiber preform in an injection mold, injecting (E10-2) a thermoplastic resin under pressure so as to impregnate the preform, and polymerizing (E10-3) the resin, the method begin **characterized in that** the fiber preform is consolidated in the injection mold prior to injecting the resin.

2. A method according to claim 1, including a consolidation step (E20) of consolidating the fiber preform prior to injecting the resin into the injection mold, this consolidation step comprising:
• making (E20-2) a fiber preform within which a consolidation resin is present;
• placing (E20-2) the fiber preform in the injection mold;
• heating (E20-3) the injection mold to the melting temperature of the consolidation resin present within the fiber preform; and
• solidifying (E20-5) the consolidation resin.

3. A method according to claim 2, wherein making a fiber preform within which a consolidation resin is present comprises inserting consolidation resin yarns while weaving the fiber preform.

4. A method according to claim 2, wherein making a fiber preform within which a consolidation resin is present comprises dusting the fiber preform with a consolidation resin in powder form.

5. A method according to claim 2, wherein making a fiber preform within which a consolidation resin is present comprises making a fiber preform using yarns coated in consolidation resin.

6. A method according to any one of claims 2 to 5, wherein the step of consolidating the fiber preform further comprises applying compacting pressure to the fiber preform in the injection mold (E20-4).

7. A method according to any one of claims 2 to 6, wherein the consolidation resin is identical to the resin injected into the injection mold.
